# EUROPEAN PATENT APPLICATION

(11) **EP 2 174 894 A1**
(43) Date of publication of application: **14.04.2010**
(21) Application number: 08826905.5
(22) Date of filing: 06.08.2008
(51) Int. Cl.: B65G 1/137

(54) **INSPECTION SYSTEM**

(30) Priority: 09.08.2007 JP 2007208442
(71) Applicant: Mitsubishi Electric Corporation, Chiyoda-ku Tokyo 100-8310 (JP)
(72) Inventor: SOGABE, Yasushi, Tokyo 100-8310 (JP)
(74) Representative: Pfenning, Meinig & Partner GbR
(86) International application number: PCT/JP2008/064141
(87) International publication number: WO 2009/020159

(57) **Abstract**

An inspection system according to the present invention includes a sensor (2) that obtains a position of a delivery vehicle (6) that carries an item (7) attached with an electric tag; a communication control device (4) that calculates a communication area using the position that is obtained by the sensor (2), the communication area configured to cover an area between the delivery vehicle (6) and a carry-in/out entrance of the item (7); and an antenna device (1) that produces the communication area by controlling an antenna and performs, via the antenna, wireless communications with the electric tag (8) that is within the communication area. The inspection system automatically inspects all the items that are present between the delivery vehicle (6) and the carry-in/out entrance.

## Description

### TECHNICAL FIELD

The present invention relates to an inspection system that automatically inspects items using wireless communications when the items are carried in/out.

### BACKGROUND ART

With downsizing and price-reducing of IC chips, IC cards are put into general use in recent years. The IC cards include contact-type IC cards that perform communications by directly touching a reader/writer and contactless-type IC cards that perform wireless communications with a reader/writer via an antenna that is part of the card. A typical contactless IC card is, for example, an electric tag. Because the electric tag can perform wireless communications, has a large memory capacity, and can be used repeatedly, the electric tag has become widely used in a short time.

Identification technologies using electric tags are called RFID (Radio Frequency Identification). The RFID is put into practice, especially, in inventory management or commodity distribution. Patent documents 1 and 2 described below disclose systems in which a reader that includes an antenna is arranged at a gate through which items pass and the reader automatically reads electric tags that are attached to the items.

Patent document 1: Japanese Patent Application Laid-open No. 2003-128213
Patent document 2: Japanese Patent Application Laid-open No. 2003-327331

### DISCLOSURE OF INVENTION

### PROBLEM TO BE SOLVED BY THE INVENTION

Items are automatically inspected when passing through the gate in the conventional technologies disclosed in the above-described patent documents, which makes it possible to implement inspection easier than manual inspection and an high-accuracy stock management. Moreover, because the accuracy of stock management of the items passed through the gate is improved, it is possible to correctly recognize loss or theft of an item, etc., after the item passed through the gate. However, because the items are inspected when passed through the gate in the above-described conventional technologies, it is impossible to manage items that have not passed through the gate after unloaded from the delivery vehicle at the arrival. In other words, it is impossible to recognize loss by accident or theft of an item that has not passed through the gate at the arrival.

The present invention has been made in view of the above, and an object of the present invention is to provide an inspection system that can automatically inspect all the items that are present between the delivery vehicle and a carry-in/out entrance.

### MEANS FOR SOLVING PROBLEM

In order to solve the problem and achieve the object, an inspection system according to the invention includes a position identifying unit that obtains a position of a transporter that carries an item attached with an electric tag; a communication control unit that calculates a communication area using the position obtained by the position identifying unit, the communication area configured to cover an area between the transporter and a carry-in/out entrance of the item; and a wireless communications unit that produces the communication area by controlling an antenna and performs, via the antenna, wireless communications with the electric tag that is within the communication area, wherein item data is obtained from the electric tag by the wireless communications.

### EFFECT OF THE INVENTION

According to the invention, an unload port of a delivery vehicle is identified and an area between the unload port and a carry-in/out entrance is determined to be a communication area. With this configuration, all the items that are present between the delivery vehicle and the carry-in/out entrance are automatically inspected.

### BRIEF DESCRIPTION OF DRAWINGS

Fig. 1 is a schematic diagram showing a configuration example of an inspection system according to a first embodiment of the present invention.
Fig. 2 is a flowchart showing an entire automatic inspection process according to the first embodiment.
Fig. 3 is a schematic diagram showing a configuration example of an inspection system according to a second embodiment of the present invention.
Fig. 4 is a flowchart showing an entire automatic inspection process according to the second embodiment.
Fig. 5 is a schematic diagram showing a configuration example of an inspection system according to a third embodiment of the present invention.
Fig. 6 is a schematic diagram showing an operational example with one vehicle.
Fig. 7 is a schematic diagram showing an operational example with two vehicles.
Fig. 8 is a schematic diagram showing a configuration example of an inspection system according to a forth embodiment of the present invention.

### EXPLANATIONS OF LETTERS OR NUMERALS

- 1, 20a, 20b, 21a, 21b: Antenna device
- 2, 22: Sensor
- 3, 23: Gate
- 4, 10, 24, 40: Communication control device
- 5: Management terminal
- 6, 6a, 6b: Delivery vehicle
- 7: Item
- 8: Electric tag
- 9, 28a, 28b, 29a, 29b, 31a,:
- 31b, 32b, 33a, 42b, 43a: Communication area
- 11, 41a, 41b: Warning device
- 12: Maximum communication area

### BEST MODE(S) FOR CARRYING OUT THE INVENTION

Exemplary embodiments of the present invention are described in detail below with reference to the accompanying drawings. The present invention is not limited to these exemplary embodiments.

### First embodiment

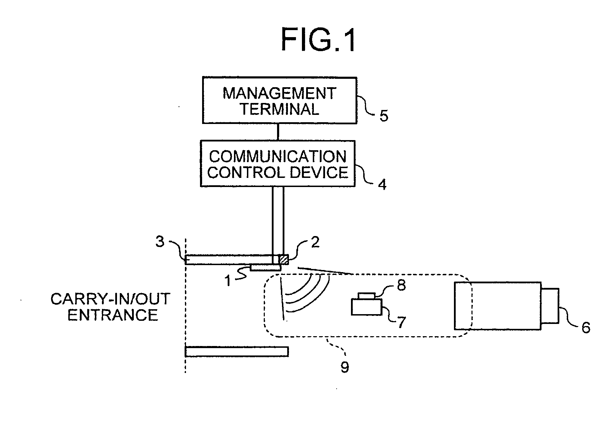

Fig. 1 is a schematic diagram showing a configuration example of an inspection system according to a first embodiment of the present invention. The inspection system according to the first embodiment includes a gate 3 provided with an antenna device 1 and a sensor 2; a communication control device 4; a management terminal 5; and an electric tag 8 that is attached to an item 7. The item 7 is carried by a delivery vehicle 6.

The antenna device 1 is connected to the communication control device 4 via a cable, for example.
The antenna device 1 produces a communication area by performing antenna beam control or transmitting power control in accordance with an instruction from the communication control device 4. The antenna device 1 obtains data about the item 7 (item data) by performing wireless communications with the electric tag 8 that is attached to the item 7. The electric tag 8 stores therein the item data, i.e., data required for inspecting the item 7.

The sensor 2 may be a combination of a distance measuring sensor and an imaging device. The sensor 2 is connected to the communication control device 4 via a cable. The sensor 2 detects a vehicle using distance data that is obtained by the distance measuring sensor and image data that is obtained by the imaging device. Specifically, the sensor 2 identifies a stop position of the vehicle and a position of an unload port of the vehicle. The sensor 2 then transmits data about the position of the vehicle that is identified in the above manner (data about the stop position and the unload-port position) to the communication control device 4 as positional data.

The gate 3 provided with the above-described antenna device 1 and the sensor 2 is arranged at a carry-in/out entrance of a warehouse, for example.

The communication control device 4 receives the positional data from the sensor 2 and calculates a communication area 9 using the positional data. The communication area 9 covers an area between the gate 3 and the unload port of the delivery vehicle 6. The communication control device 4 then generates a control signal for producing the communication area 9 and transmits the control signal to the antenna device 1. The control signal is a signal that is used in the antenna beam control or the transmitting power control. The communication control device 4 also receives the item data about the item 7 that is obtained by the wireless communications between the antenna device 1 and the electric tag 4 and transmits the item data to the management terminal 5.

The management terminal 5 performs an inspection using the item data that is received from the communication control device 4. Specifically, the management terminal 5 stores the item data that is received from the communication control device 4 in a management database (not shown). This makes stock management or carry-in/out management, etc., possible.

For the convenience of explanation, the communication control device 4, which controls the wireless communications, and the management terminal 5, which performs the inspection process, are separately presented in this embodiment; however, the configuration is not limited thereto. The communication control device 4 and the management terminal 5 can be formed as a single unit. Moreover, although the single item 7 is representatively given in the present embodiment, a plurality of items is actually loaded and the electric tag is attached to each of the items.

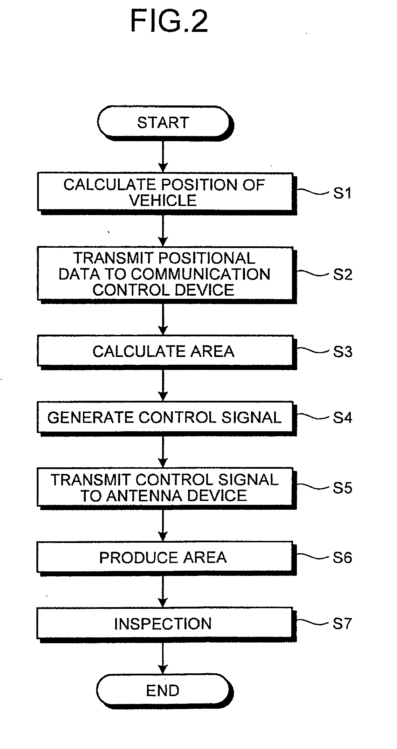

An automatic inspection process performed by the inspection system having the above configuration is described below with reference to the flowchart shown in Fig. 2. Fig. 2 is a flowchart showing the entire automatic inspection process. The above-described configuration can be applied to either carry-in or carry-out. A case of performing carry-in is described below as an example.

The sensor 2 first calculates and identifies the stop position of the delivery vehicle 6 and the position of the unload port of the delivery vehicle 6 using the image data that is obtained by the imaging device and the distance data that is obtained by the distance measuring sensor (Step S1). The sensor 2 then transmits the identified positional data (data about the stop position and the unload-port position) to the communication control device 4 (Step S2).

Upon receiving the positional data, the communication control device 4 calculates the communication area 9 using the stop position and the position of the unload port so that items that are present between the unload port and the carry-in/out entrance provided with the gate 3 can be inspected (Step S3). The communication control device 4 generates the control signal for producing the communication area 9 (Step S4) and transmits the control signal to the antenna device 1 (Step S5).

The antenna device 1 performs the antenna beam control and the transmitting power control, etc., based on the received control signal and produces the communication area 9 as the communication area (Step S6).

When the item 7 is carried from the unload port of the delivery vehicle 6 toward the carry-in/out entrance in this situation, predetermined communications are performed between the electric tag 8 that is attached to the item 7 and the antenna device 1. As a result of the predetermined communications, the management terminal 5 receives the item data about the item 7 via the antenna device 1 and the communication control device 4, and performs inspection (Step S7). This makes it possible to implement the stock management, the carry-in/out management, etc. Although only the single item 7 is shown in Figs. 1 and 2, a plurality of items is actually carried-in.

As described above, according to the present embodiment, the unload port of the delivery vehicle 6 is identified and the area between the unload port and the carry-in/out entrance is determined to be the communication area. With this configuration, all the items that are present between the delivery vehicle and the carry-in/out entrance can be automatically inspected. This makes it possible to prevent accidents such as loss of items, theft or misdelivery.

Moreover, because the communication area is calculated using the vehicle stop position and the unload-port position, a proper beam control and a proper transmitting power control depending on various situations, such as variations of the vehicle stop positions, can be performed.

Although the communication area 9 is produced using the single antenna device 1 in the present embodiment, the configuration is not limited thereto. The communication area 9 can be produced by performing the beam control and the transmitting power control over a plurality of antenna devices.

Although it has been described in the present embodiment that the sensor 2 is the combination of the distance measuring sensor and the imaging device, some other sensors that achieve the same effect can be adopted. For example, the communication area may be calculated using data obtained by a ground-embedded sensor that is connected to the communication control device 4 or obtained by a radar or a GPS (Global Positioning System) mounted on the vehicle. When obtaining data by the radar or the GPS mounted on the vehicle, the delivery vehicle 6 additionally needs a transmitter, and the communication control device 4 additionally needs a receiver.

Although the communication area is produced using the unload port of the delivery vehicle 6 as a reference point in the present embodiment, a forward position of a truck box (containing a position on the truck box) can be alternatively used as the reference point. In this case, it is possible to inspect the delivery vehicle 6 with the items being loaded.

Although it has been described in the present embodiment that a single tag is attached to each item, a plurality of tags may be attached to each item. Similarly, the present embodiment is applicable to a case, in which a single tag is provided for a plurality of items, or to a case, in which a plurality of items is contained in a container or the like and a tag is attached to the container.

Although it has been described in the present embodiment that the item is carried by the delivery vehicle 6 and then carried into the warehouse, the item can be carried by another transporter, such as a ship, in the above-described inspection system that manages carry-in/out of items.

Furthermore, although the cables connect the antenna device with the communication control device and the communication control device with the sensor in the present embodiment, the configuration is not limited thereto, and radio connections may be adopted.

### Second embodiment

In the first embodiment, the communication area covering an area between the unload port of the vehicle and the carry-in/out entrance is produced corresponding to the stop position. The present embodiment further issues, for a vehicle that has stopped outside a coverage area of an antenna device (maximum communication area), a guiding instruction to guide the vehicle into the coverage area or a warning indicating the incorrect stop position. Part of the configuration and operation in the present embodiment that is different from that in the first embodiment is described below.

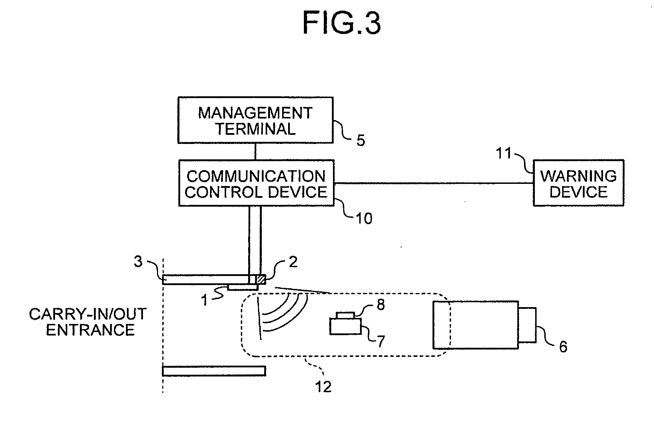

Fig. 3 is a schematic diagram showing a configuration of the inspection system according to the second embodiment of the present invention. The inspection system according to the present embodiment includes a warning device 11 in addition to the components in the first embodiment and a communication control device 10 instead of the communication control device 4. Parts corresponding to those in the first embodiment are denoted with the same reference numerals, and the same description is not repeated.

The communication control device 10 in the present embodiment functions in the same manner as the communication control device 4. Moreover, the communication control device 10 stores therein a predetermined coverage area of the antenna device 1 (equivalent to a maximum communication area 12) and determines using the positional data that is received from the sensor 2 whether the stop position of the delivery vehicle 6 is correct (within the coverage area). If it is determined that the stop position is correct, the communication control device 10 calculates a communication area using the positional data such that the communication area covers an area between the carry-in/out entrance and the unload port of the delivery vehicle 6. Then, the communication control device 10 generates a control signal for producing the communication area and transmits the control signal to the antenna device 1. In contrast, if the stop position is incorrect, the communication control device 10 transmits a control signal to the warning device 11 to notify the delivery vehicle 6 of the incorrect stop position.

The warning device 11 is connected to the communication control device 10 via a cable, for example. The warning device 11 gives the delivery vehicle 6 a warning of the incorrect stop position out of the maximum communication area 12 or issues a guiding instruction to guide the delivery vehicle 6 into the maximum communication area 12 by displaying a message or announcement, in accordance with the control signal received from the communication control device 10.

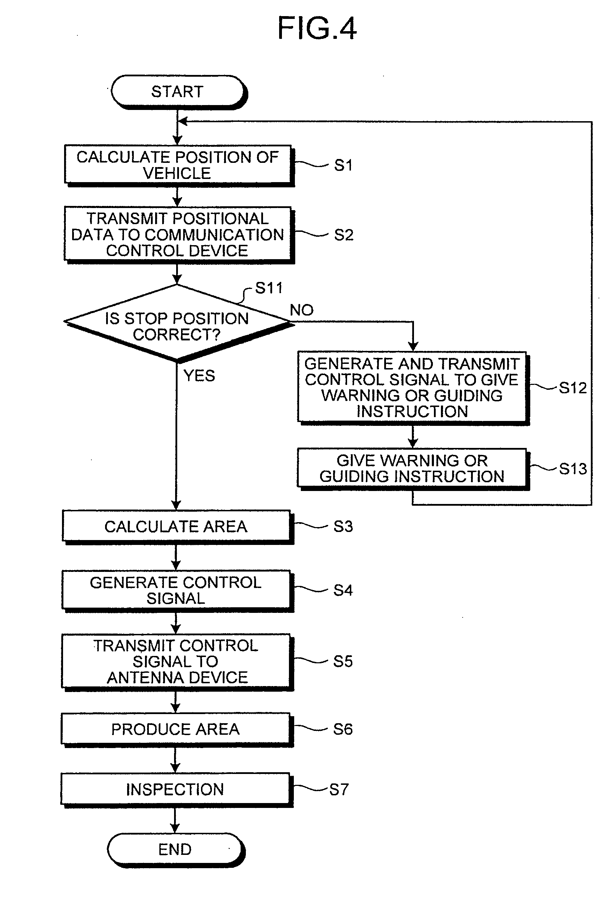

An automatic inspection process performed by the inspection system having the above-described configuration is described below with reference to the flowchart shown in Fig. 4. Fig. 4 is a flowchart showing the entire automatic inspection process. The part different from the above-described first embodiment is described below.

In the present embodiment, after the processes of Steps S1 and S2 are performed in the same manner as in the first embodiment, the communication control device 10 determines whether the unload port of the delivery vehicle 6 is within the maximum communication area 12 (the stop position is correct) using the positional data that is received from the sensor 2 (Step S11). If the unload port is within the maximum communication area 12 (Yes at Step S11), the processes of Step S3 and subsequent steps are performed in the same manner as in the first embodiment.

In contrast, if the communication control device 10 determines that the unload port of the delivery vehicle 6 is out of the maximum communication area 12 (No at Step S11), the communication control device 10 generates a control signal using the positional data received from the sensor 2 to give the delivery vehicle 6 a warning of the incorrect stop position out of the maximum communication area 12 or to issue a guiding instruction to guide the delivery vehicle 6 into the maximum communication area 12. Then, the communication control device 10 transmits the control signal to the warning device 11 (Step S12). The warning device 11 then displays or announces a message saying "The stop position is not correct. Please move to the correct stop position." (Step S13), for example. Alternatively, as the guidance, the communication control device 10 displays or announces a message saying "Please move toward right rear." depending on the position of the delivery vehicle 6 (Step S13), for example. Then, the communication control device 10 performs the processes of Steps S1, S2, S11, S12, and S13 repeatedly until the unload port of the delivery vehicle 6 moves into the maximum communication area 12 (Yes at Step S11).

As described above, according to the present embodiment, when the delivery vehicle 6 has stopped out of the maximum communication area 12, the warning device 11 gives the delivery vehicle 6 the warning and issues the guiding instruction in accordance with the control signal that is received from the communication control device 10. With this configuration, the vehicle can be guided to the correct stop position, while obtaining the same effects as in the first embodiment. This makes it possible to perform the inspection with a higher accuracy.

Although the above-described warning device 11 is adopted in the present embodiment, the configuration is not limited thereto. Some other units that can guide the vehicle to the correct position can be adopted alternatively, such as a unit that gives a warning or issues a guiding instruction using light, for example. Alternatively, it is allowable to modify the communication control device 10 to directly present a guide staff or a driver an instruction indicating the correct stop position, without such unit as the above-described warning device 11.

Furthermore, although the cable connects the communication control device with the warning device in the present embodiment, the configuration is not limited thereto, and radio connections can be adopted.

### Third embodiment

The inspection system, in which one carry-in/out entrance is arranged and one vehicle is inspected, has been described in the first and the second embodiments. In the present embodiment, an inspection system is described, in which a plurality of carry-in/out entrances is arranged and a plurality of vehicles is inspected at the same time.
Part of the configuration and operation in the present embodiment that is different from that in the above-described first and the second embodiments is described below.

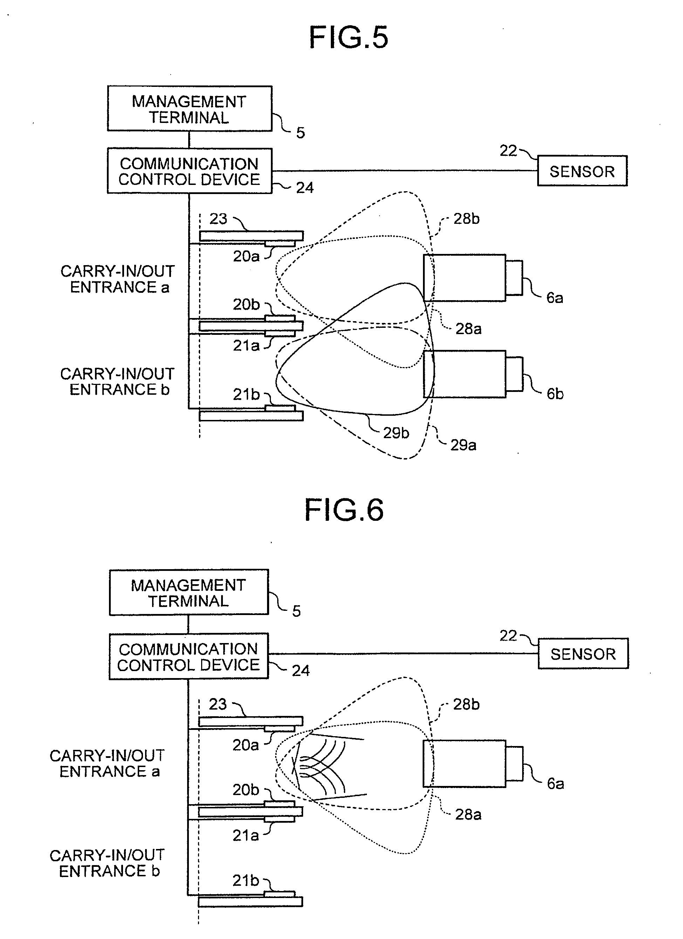

Fig. 5 is a schematic diagram showing a configuration of the inspection system according to the third embodiment of the present invention. The inspection system according to the present embodiment includes a gate 23 provided with an antenna device 20a, an antenna device 20b, an antenna device 21a, an antenna device 21b, and a sensor 22; a communication control device 24; and the management terminal 5. The sensor 22 functions in the same manner as the sensor 2 and can calculate the positional data of a plurality of delivery vehicles. Each antenna device performs wireless communications with an electric tag attached to an item that has been carried by a delivery vehicle 6a or a delivery vehicle 6b, whereby the inspection is performed. The delivery vehicle 6a is a vehicle that carries in an item through a carry-in/out entrance a and/or carries out an item through the carry-in/out entrance a. The delivery vehicle 6b is a vehicle that carries in an item through a carry-in/out entrance b and/or carries out an item through the carry-in/out entrance b. Parts corresponding to those in the above-described first embodiment are denoted with the same reference numerals, and the same description is not repeated.

Each of the antenna device 20a, the antenna device 20b, the antenna device 21a, and the antenna device 21b has the same configuration as the antenna device 1.
The antenna device 20a and the antenna device 20b are arranged at both sides of the carry-in/out entrance a, respectively. The antenna device 21a and the antenna device 21b are arranged at both sides of the carry-in/out entrance b. The arrangement of the antenna devices is not limited thereto, and three or more antenna devices may be arranged at each carry-in/out entrance other than the both sides. Each of the antenna devices is connected to the communication control device 24 via a cable. Each of the antenna devices performs the antenna beam control and the transmitting power control in accordance with the control signal that is received from the communication control device 24, thereby producing the communication area.

The communication control device 24 receives the positional data from the sensor 22. The communication control device 24 calculates a communication area 28 (28a or 28b) and a communication area 29 (29a or 29b) based on the positional data such that the communication area 28 covers an area between the gate 23 and the unload port of the delivery vehicle 6a and the communication area 29 covers an area between the gate 23 and the unload port of the delivery vehicle 6b. Then, the communication control device 24 generates control signals for producing these communication areas and transmits each of the control signals to the corresponding antenna device. The communication control device 24 receives item data that is obtained by the wireless communications between each of the antenna devices and an electric tag that is attached to the item, and transmits the item data to the management terminal 5.

In the present embodiment, as shown in Fig. 5 as an example, the antenna device 20a has directionality toward the vehicle stop position of the carry-in/out entrance b and the antenna device 21b has directionality toward the vehicle stop position of the carry-in/out entrance a. Therefore, when both the delivery vehicles 6a and 6b are at stop positions, the antenna device 20a may interfere the communication area that is produced for the automatic inspection at the carry-in/out entrance b, depending on the stop position of the delivery vehicle 6b and the magnitude of the transmitted power, etc. Similarly, the antenna device 21b may interfere the communication area that is produced for the automatic inspection at the carry-in/out entrance a.

To avoid the interference, the communication control device 24 takes the following points into consideration to calculate the communication area. Specifically, the communication control device 24 selects an antenna device that produces an appropriate communication area depending on the presence and the stop position of the delivery vehicle and performs the beam control and the transmitting power control on the selected antenna device in the same manner as in the above-described first embodiment. With this configuration, the optimum communication areas that do not interfere with each other are produced.

An automatic inspection process performed by the inspection system having the above configuration is described below with reference to the drawings. A case, in which one delivery vehicle is used, is described below with reference to Fig. 6.

The sensor 22 first calculates and identifies the stop position and the position of the unload port of the delivery vehicle 6a based on the image data that is obtained by the imaging device and the distance data that is obtained by the distance measuring sensor (process equivalent to Step S1 in the first embodiment). The sensor 22 then transmits the identified positional data to the communication control device 24 (process equivalent to Step S2).

Upon receiving the positional data, the communication control device 24 determines that the delivery vehicle 6a has stopped in front of the carry-in/out entrance a based on the stop position and the unload-port position. The communication control device 24 then selects the antenna device 20a and the antenna device 20b as the target antenna devices to be controlled. Each of the antenna device 20a and the antenna device 20b covers the communication area between the carry-in/out entrance a and the unload port. Because only the delivery vehicle 6a is parked, it is not necessary to take into consideration influences caused by the interference of the antenna device 20a with another communication area.

The communication control device 24 calculates either the communication area 28a that is producible by the antenna device 20a or the communication area 28b that is producible by the antenna device 20b, so that items that are present between the unload port and the carry-in/out entrance a can be inspected (process equivalent to Step S3). Then, the communication control device 24 generates a control signal for producing the communication area (process equivalent to Step S4). When the communication control device 24 generates a control signal for producing the communication area 28a, it transmits the control signal to the antenna device 20a, whereas when it generates a control signal for producing the communication area 28b, it transmits the control signal to the antenna device 20b (process equivalent to Step S5).

Then, the antenna device (20a or 20b) that has received the control signal performs the antenna beam control and the transmitting power control, etc., in accordance with the received control signal and produces a communication area as the communication area (process equivalent to Step S6).

When an item is carried from the unload port of the delivery vehicle 6a toward the carry-in/out entrance a in this situation, predetermined communications is performed between the electric tag that is attached to the item and the antenna device. As a result of the predetermined communications, the management terminal 5 receives the item data via the antenna device and the communication control device 24 and then performs an inspection (process equivalent to Step S7).

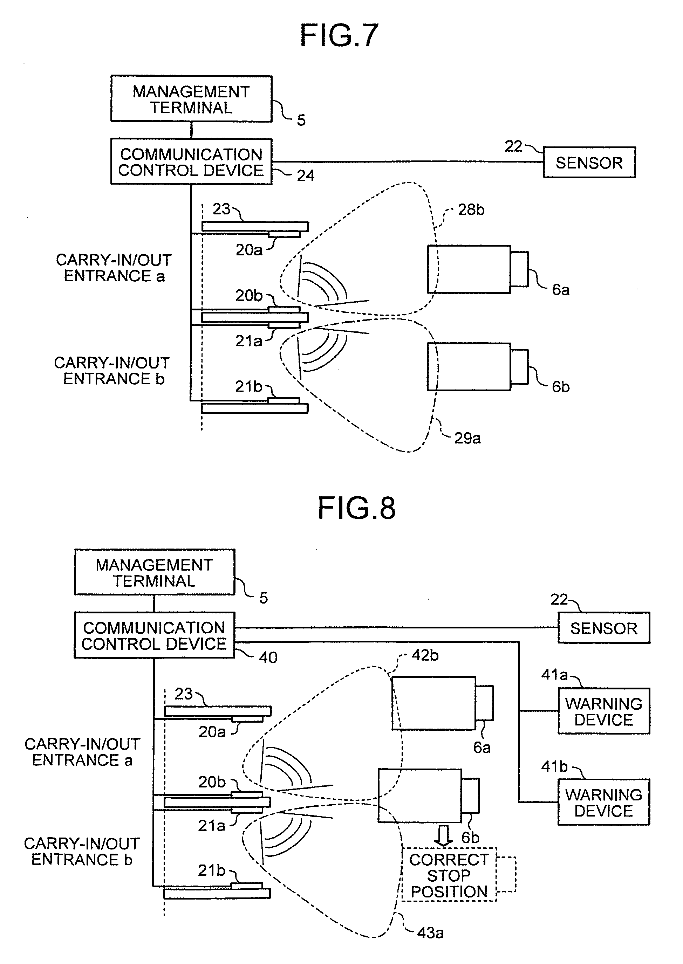

Next, a case, in which two delivery vehicles are used, is described below with reference to Fig. 7. In the following example, it is assumed that the delivery vehicle 6a has stopped in front of the carry-in/out entrance a, and carrying-in therefrom has started; the communication area 28a (see Fig. 5) has been produced by operation of the antenna device 20a. It is assumed that the new delivery vehicle 6b comes and stops in front of the carry-in/out entrance b after the above-described carrying-in has started.

The sensor 22 first calculates and identifies the stop position and the position of the unload port of the newly arrived delivery vehicle 6b based on the image data that is obtained by the imaging device and the distance data that is obtained by the distance measuring sensor (process equivalent to Step S1 in the first embodiment). The sensor 22 then transmits the identified positional data to the communication control device 24 (process equivalent to Step S2).

Upon receiving the positional data, the communication control device 24 determines that the newly arrived delivery vehicle 6b has stopped in front of the carry-in/out entrance b based on the stop position and the unload-port position. The communication control device 24 then temporarily selects the antenna device 21a and the antenna device 21b as the target antenna devices to be controlled. Each of the antenna device 21a and the antenna device 21b covers the communication area between the carry-in/out entrance b and the unload port. In this situation, the antenna device 20a may interfere the communication area that is produced for the automatic inspection at the carry-in/out entrance b. Also, the antenna device 21b may interfere the communication area that is produced for the automatic inspection at the carry-in/out entrance a.

To avoid the interference, the communication control device 24 according to the present embodiment further selects the antenna device 21a from among the selected antenna device 21a and the antenna device 21b, to have it produced the communication area. As described above, the communication area 28a has been produced in this example; therefore, the communication control device 24 changes the antenna device that produces a communication area to the antenna device 20b. Incidentally, if the communication area 28b has been produced, the changing process is not performed.

The communication control device 24 calculates the communication area 28b producible by the antenna device 20b so as to inspect an item that is present between the unload port of the delivery vehicle 6a and the carry-in/out entrance a and so as not to interfere the inspection process at the adjacent carry-in/out entrance b. The communication control device 24 calculates the communication area 29a producible by the antenna device 21a so as to inspect an item that is present between the unload port of the delivery vehicle 6b and the carry-in/out entrance b and so as not to interfere the inspection process at the adjacent carry-in/out entrance a (process equivalent to Step S3). Then, the communication control device 24 generates control signals for producing the communication areas 28b and 29a (process equivalent to Step S4). The communication control device 24 then transmits the control signal for producing the communication area 28b to the antenna device 20b and the control signal for producing the communication area 29a to the antenna device 21a (process equivalent to Step S5).

Upon receiving the control signal for producing the communication area 28b, the antenna device 20b then performs the antenna beam control and the transmitting power control, etc., in accordance with the received control signal and produces the communication area 28b as the communication area (process equivalent to Step S6). Upon receiving the control signal for producing the communication area 29a, the antenna device 21a performs the antenna beam control and the transmitting power control, etc., in accordance with the received control signal and produces the communication area 29a as the communication area (process equivalent to Step S6).

When an item is carried from the unload port of each delivery vehicle toward the corresponding carry-in/out entrance in this situation, predetermined communications are performed between the electric tag that is attached to the item and the corresponding antenna device. As a result of the predetermined communications, the management terminal 5 receives item data via each of the antenna devices and the communication control device 24, and performs inspections (process equivalent to Step S7).

As described above, according to the present embodiment, when a plurality of carry-in/out entrances is arranged and a plurality of vehicles is inspected at the same time, communication areas are defined such that each communication area does not interfere with an inspection process at the adjacent carry-in/out entrance. With this configuration, even when a plurality of delivery vehicles is at the respective stop positions and carrying-in of items therefrom is performed, all the items that are present between each delivery vehicle and the carry-in/out entrances can be inspected automatically without affected by the mutual interference. This makes it possible to prevent accidents such as loss of an item by accident, theft, and misdelivery.

In the present embodiment, two antenna devices are arranged at each carry-in/out entrance, and the communication area is produced by selecting an antenna device such that no interference with inspection processes at adjacent carry-in/out entrance occurs. In some cases, there is an area in which the performance of wireless communications deteriorates due to influence of reflected waves, etc., depending on the ambient surroundings. When it is unnecessary to take into consideration the influence of the interference with adjacent areas as shown in Fig. 6, communications using the two antenna devices alternately may be performed in order to improve a communication success ratio. This provides a more stable inspection process. Furthermore, if a single antenna device can produce a communication area covering two delivery vehicles, the single antenna device can be adopted for inspection processes. Furthermore, when it is determined that a communication area is producible such that the communication area does not interfere with the inspection process at the adjacent carry-in/out entrance thereof by adjusting the beam control or the transmitting power control, communication areas may be produced using a plurality of antenna devices at each carry-in/out entrance, instead of producing the communication area using the selected single antenna device as in the above-described manner.

Although it has been described in the present embodiment that the two carry-in/out entrances are arranged parallel to each other as an example, the present embodiment is applicable to a case, in which three or more carry-in/out entrances are arranged parallel to each other, or to a case, in which carry-in/out entrances are arranged nonparallel to each other.

### Fourth embodiment

The inspection system has been described in the third embodiment in which a plurality of carry-in/out entrances is arranged and a plurality of vehicles can be inspected at the same time. The present embodiment further issues a guiding instruction or a warning for a vehicle that has stopped out of a coverage area of an antenna device (out of the maximum communication area) or that has stopped within an area but may suffer interference from an inspection process at another carry-in/out entrance (influenced by an existing communication area). Part of the configuration and operation in the present embodiment that is different from that in the above-described first, the second, and the third embodiments is described below.

Fig. 8 is a schematic diagram showing the configuration of the inspection system according to the fourth embodiment of the present invention. The inspection system according to the present embodiment includes a warning device 41a and a warning device 41b in addition to the components in the third embodiment and a communication control device 40 instead of the communication control device 24. Parts corresponding to those in the above-described first, the second and the third embodiments are denoted with the same reference numerals, and the same description is not repeated.

The communication control device 40 in the present embodiment functions in the same manner as the communication control device 24. Additionally, the communication control device 40 stores therein a predetermined coverage area (maximum communication area) of each of the antenna devices and the existing communication area that is produced by another antenna device, and determines whether the stop position of the newly arrived delivery vehicle 6b is correct using the positional data that is received from each sensor, for example. If it is determined that the stop position is correct, the communication control device 40 calculates a communication area using the positional data such that the communication area covers an area between the carry-in/out entrance and the unload port of the delivery vehicle 6b. Then, the communication control device 40 generates a control signal for producing the communication area and transmits the control signal to the predetermined antenna device. In contrast, if the stop position is incorrect, the communication control device 40 transmits a control signal to the warning devices 41a and 41b to notify the newly arrived delivery vehicle 6b of the incorrect stop position.

The warning devices 41a and 41b are connected to the communication control device 40 via cables, for example. Each of the warning devices 41a and 41b gives the corresponding delivery vehicle a warning of the incorrect stop position or issues a guiding instruction to guide the delivery vehicle to the correct stop position by displaying a message or announcement, in accordance with the control signal received from the communication control device 40.

An automatic inspection process performed by the inspection system having the above-described configuration according to the present embodiment is described below with reference to Fig. 8 and Fig. 4. The part different from the above-described third embodiment is described below.
In the following example, it is assumed that carrying-in from the delivery vehicle 6a that stops in front of the carry-in/out entrance a has started; the communication area 42b has been produced by operation of the antenna device 20a. It is assumed that the delivery vehicle 6b comes and stops in front of the carry-in/out entrance b while above described carrying-in has started. The newly arrived delivery vehicle 6b stops within the existing communication area 42b.

In the present embodiment, after the processes of Steps S1 and S2 shown in Fig. 4, upon receiving the positional data, the communication control device 40 determines that the newly arrived delivery vehicle 6b stops in front of the carry-in/out entrance b using the stop position and the unload-port position, and temporarily selects the antenna device 21a and the antenna device 21b as the target antenna devices to be controlled. In this situation, the antenna device 20a may interfere with the communication area that is produced for the automatic inspection at the carry-in/out entrance b. The antenna device 21b may interfere with the communication area that is produced for the automatic inspection at the carry-in/out entrance a.

To avoid the interference, the communication control device 40 according to the present embodiment further selects the antenna device 21a from among the selected antenna devices 21a and 21b, to have it produced the communication area. As described above, the communication area 28a has been produced by operation of the antenna device 20b in this example; therefore, the antenna device at the carry-in/out entrance a is not changed.

The communication control device 40 determines whether it is possible to produce a communication area such that an item that is present between the unload port of the delivery vehicle 6b and the carry-in/out entrance b can be inspected without interfering with the inspection process at the adjacent carry-in/out entrance a. Specifically, the communication control device 40 determines whether the stop position of the delivery vehicle 6b is correct, i.e., within the coverage area of the antenna device 21a but out of the existing communication area 42b (process equivalent to Step S11).

As mentioned above, the first stop position of the newly arrived delivery vehicle 6b is within the existing communication area 42b in the present embodiment; therefore, the communication control device 40 generates a control signal to give the delivery vehicle 6b a warning of the incorrect stop position within the existing communication area 42b or to issue a guiding instruction that guides the vehicle to the correct stop position that is within the coverage area of the antenna device 21a and out of the existing communication area 42b. The communication control device 40 then transmits the control signal to the warning device 41b (process equivalent to Step S12). After that, the communication control device 40 performs the warning process and the guiding process repeatedly until the unload port of the delivery vehicle 6b moves into the correct stop position that is within the coverage area of the antenna device 21a and out of the existing communication area 42b (process equivalent to Step S13).

When the unload port of the delivery vehicle 6b moves into the correct stop position, the communication control device 40 calculates a communication area 43a that is produced by the antenna device 21a (process equivalent to Step S3). Then, the communication control device 40 generates a control signal for producing the communication area 43a (process equivalent to Step S4). The communication control device 40 then transmits the control signal for producing the communication area 43a to the antenna device 21a (process equivalent to Step S5).

Upon receiving the control signal for producing the communication area 43a, the antenna device 21a performs the antenna beam control and the transmitting power control, etc., in accordance with the received control signal and produces the communication area 43a as a communication area (process equivalent to Step S6).

When an item is carried from the unload port of the delivery vehicle 6b toward the carry-in/out entrance b in this situation, the predetermined communications is performed between an electric tag that is attached to the item and the antenna device 21a. As a result of the predetermined communications, the management terminal 5 receives item data via the antenna device 21a and the communication control device 40, and then performs an inspection (process equivalent to Step S7).

As described above, according to the present embodiment in which a plurality of carry-in/out entrances is arranged and a plurality of vehicles can be inspected at the same time, when a delivery vehicle stops at an incorrect position the warning device gives the delivery vehicle a warning and issues a guiding instruction that guides the vehicle to the correct stop position in accordance with the control signal received from the communication control device 40. With this configuration, it is possible to guide the vehicle to the correct stop position, while obtaining the same effects as in the third embodiment. This makes it possible to provide inspection with a higher accuracy.

It has been described in the present embodiment that a newly arrived delivery vehicle is moved to the correct stop position as an example. However, when it is impossible to guide the newly arrived delivery vehicle to the correct stop position by only moving the newly arrived delivery vehicle, an existing delivery vehicle that has started carrying-in may be moved and the communication area may be produced again.

Although it has been described in the present embodiment that the newly arrived delivery vehicle 6b stops within the existing communication area 42b, When the newly arrived delivery vehicle 6b stops out of the existing communication area 42b and out of the coverage area of the antenna device 21a, warning or guiding is performed in the same manner.

It has been described in the present embodiment that the newly arrived delivery vehicle 6b stops within the existing communication area 42b. In case no existing communication area is present (no vehicle other than the delivery vehicle 6b is parked) for example, the processes in the above-described second embodiment are performed.

### INDUSTRIAL APPLICABILITY

As set forth hereinabove, an inspection system according to the present invention is suitable as an inspection system that automatically inspects all items that are present between a delivery vehicle and a carry-in/out entrance.

## Claims

1. An inspection system comprising:
a position identifying unit that obtains a position of a transporter that carries an item attached with an electric tag;
a communication control unit that calculates a communication area using the position obtained by the position identifying unit, the communication area configured to cover an area between the transporter and a carry-in/out entrance of the item; and
a wireless communications unit that produces the communication area by controlling an antenna and performs, via the antenna, wireless communications with the electric tag that is within the communication area,
wherein item data is obtained from the electric tag by the wireless communications.

2. The inspection system according to claim 1, further comprising an instructing unit that issues an instruction in accordance with a predetermined control by the communication control unit to guide the transporter to a correct position,
wherein upon determining using the position obtained by the position identifying unit that the transporter is out of a communicapable area of the wireless communication unit, the communication control unit performs control as the predetermined control so as to give the transporter a warning of incorrect position or a guiding instruction to guide the transporter into the communicapable area.

3. The inspection system according to claim 1, wherein upon determining using the position obtained by the position identifying unit that a plurality of transporters are in front of respective carry-in/out entrances, the communication control unit calculates the communication areas, each communication area configured to cover an area between the corresponding transporter and the carry-in/out entrance and configured to prevent wireless communications performed in the respective communication areas from interfering with each other.

4. The inspection system according to claim 3, wherein
the wireless communications unit is provided with a plurality of antennas each having different directionality at each of the carry-in/out entrances, and
the communication control unit selects from the antennas at each of the carry-in/out entrances the antenna that prevents the wireless communications from interfering with each other.

5. The inspection system according to claim 4, further comprising an instructing unit that issues an instruction in accordance with a predetermined control of the communication control unit to guide the transporter to a correct position, wherein
Wherein upon determining using the position obtained by the position identifying unit that the transporter is out of a communicable area of the selected antenna, the communication control unit performs control as the predetermined control so as to give the transporter a warning of incorrect position or a guiding instruction to guide the transporter into the communicable area.
